# EUROPÄISCHE PATENTSCHRIFT

(11) **EP 1 247 735 B1**
(45) Veröffentlichungstag und Bekanntmachung des Hinweises auf die Patenterteilung: **20.04.2005**
(21) Anmeldenummer: 02003770.1
(22) Anmeldetag: 20.02.2002
(51) Int. Cl.: B64C 23/00, F15D 1/12

(54) **Verfahren zur Reduzierung von Schwingungen in einem Hohlraum und überströmte Flächenanordnung**
Method to reduce oscillations in cavities and surface arrangement in a fluid flow
Procédé pour réduire les oscillations dans des cavités et agencement de surface dans un écoulement de fluide

(30) Priorität: 06.04.2001 DE 10117300
(43) Veröffentlichungstag der Anmeldung: 09.10.2002
(73) Patentinhaber: DLR Deutsches Zentrum für Luft- und Raumfahrt e.V., 51147 Köln (DE)
(72) Erfinder: Delfs, Jan, Dr. Ing., 38100 Braunschweig (DE)
(74) Vertreter: Gerstein, Hans Joachim, Dipl.-Ing.

(56) Entgegenhaltungen:
- US-A- 4 174 083
- US-A- 5 340 054
- US-A- 5 699 981
- US-B1- 6 206 326

## Beschreibung

Die Erfindung betrifft ein Verfahren zur Reduzierung von Schwingungen in einem Hohlraum, wobei die Öffnung des Hohlraumes von einer Strömung in eine Strömungsrichtung überströmt wird.

Die Erfindung betrifft ferner eine überströmte Flächenanordnung mit einem Hohlraum, wobei die Öffnung des Hohlraumes von einer Strömung in einer Strömungsrichtung überströmbar ist.

Bei der Überströmung von Flächenanordnungen mit relativ flachen Hohlräumen, insbesondere bei Flugzeugen, treten selbsterregte Druckschwingungen auf, deren Frequenz und in der Regel hohe Schwankungsintensität von der Strömungsmachzahl abhängt. Besonders bei transsonischen Strömungsgeschwindigkeiten im Bereich der Schallgeschwindigkeit besitzen diese Oszillationen derart hohe Amplituden, dass infolge der auftretenden Wechsellasten eine Materialermüdung und Zerstörung der Struktur der Flächenanordnung und des Hohlraums eintreten kann. Solche kritischen Hohlräume sind zum Beispiel Waffenschächte an Kampfflugzeugen oder im Flugzeugrumpf untergebrachte zurückgesetzte optische Instrumente.

Experimentelle und theoretische Untersuchungen der Hohlraumschwingungen haben gezeigt, dass sich oberhalb der Ebene der Öffnung des Hohlraumes eine freie Strömungsscherschicht befindet, die hydrodynamisch instabil ist und infolgedessen zu räumlich in Strömungsrichtung aufklingenden Wellenbewegungen neigt. Dies führt zu einem fortwährenden Ein- und Auftauchen der Strömungsscherschicht in den Hohlraum in der Nähe der Hohlraumrückwand. Hierdurch ist die Hohlraumrückwand zeitweise immer wieder der vollen Außenströmung ausgesetzt. Der hiermit verbundene zeitweise Aufstau der Strömung an der Hohlraumrückwand führt zur Erzeugung eines Druckimpulses, dessen Schalldruckanteil innerhalb des Hohlraums zu der Hohlraumvorderwand vorläuft und an dessen Oberkante eine neue instabile Welle in der Strömungsscherschicht anregt. Es entsteht also ein Rückkopplungsmechanismus, der ein Abklingen der Hohlraumschwingungen verhindert.

Zur Minderung der kritischen Hohlraumschwingungen sind verschiedene Methoden entwickelt worden, die entweder andere Nachteile haben oder technisch nicht sinnvoll realisierbar sind.

Es ist bekannt, Spoiler in der Grenzschicht vor dem Hohlraum anzubringen, um damit die Wirbelstärke in der an die Grenzschicht anschließenden Hohlraumscherschicht zu erhöhen und letztgenannte damit zu stabilisieren. Hierdurch können die tonalen Anteile des Druckspektrums gemindert werden. Nachteilig entsteht jedoch eine Erhöhung der Intensität breitbandiger Signalanteile infolge der Erzeugung zusätzlicher Turbulenz.

Weiterhin ist bekannt, die Hohlraumrückwand schräg zu gestalten, um den Aufstau zu mindern. Hierdurch können die Hohlraumschwingungen im gesamten Druckspektrum erheblich gemindert werden. Oftmals ist eine Änderung der Hohlraumgeometrie konstruktiv nicht möglich, wie zum Beispiel in Waffenschächten von Kampfflugzeugen.

Weiterhin ist bekannt, aerodynamische Auftriebskörper über den Hohlraum in der Nähe der Rückwand anzubringen, um das Ein- und Auftauchen der Scherschicht in den Hohlraum zu unterdrücken. Auch hierdurch können die Hohlraumschwingungen sehr gut im gesamten Druckspektrum gemindert werden. Nachteilig wird die Hohlraumöffnung jedoch durch die Auftriebskörper teilweise versperrt, so dass diese Ausführungsform bei Waffenschächten in Kampfflugzeugen nicht einsetzbar ist.

Es ist ferner bekannt, durch Öffnungen in der Hohlraumvorderwand oder in der Grenzschicht stromaufwärts von dem Hohlraum Luft abzusaugen oder auszublasen. Durch die Luftabsaugung oder Luftausblasung in der Hohlraumvorderwand wird das Scherschichtprofil und damit die Instabilität der Scherschicht beeinflusst. Die Luftabsaugung oder Luftausblasung in der Grenzschicht stromaufwärts von dem Hohlraum wirkt wie ein Spoiler. Die Maßnahme führt teilweise zu einer Verminderung von Hohlraumschwingungen. Hierzu ist jedoch ein relativ großer technischer Aufwand erforderlich. Zudem kann die Flugtauglichkeit beeinflusst werden.

Es ist weiterhin eine aktive Schwingungssteuerung oder Schwingungsregelung mittels Aktuatoren bekannt, um auslöschende Gegen-Störsignale anzuregen. Dies kann durch hochfrequent oszillierende mechanische Aktuatoren in der anströmenden Grenzschicht oder durch hochfrequent pulsendes Ausblasen von Luft aus dem Hohlraum erfolgen. Dieses Verfahren erfordert nachteilig einen relativ hohen technischen Aufwand und eine relativ komplizierte Regelungstechnik für die Aktuatoren. Für den Einsatz in Flugzeugen ist das Verfahren zu kompliziert.

Aufgabe der Erfindung war es daher, ein verbessertes Verfahren zur Reduzierung von Schwingungen in einem Hohlraum anzugeben, das zuverlässig, kostengünstig und einfach ist und möglichst unabhängig von den technischen Randbedingungen und der Form des Hohlraums durchgeführt werden kann.

Die Aufgabe wird durch Erzeugen einer Längswirbelpaarströmung mit zwei Längswirbelstrukturen an den Seitenkanten des Hohlraums in Strömungsrichtung gelöst, wobei die Rotationsrichtung der beiden Längswirbelstrukturen der Längswirbelpaarströmung gegenläufig zueinander und die beiden Längswirbelstrukturen so gerichtet sind, dass die in Strömungsrichtung rechts befindliche Längswirbelstruktur im Uhrzeigersinn rotiert und die in Strömungsrichtung links befindliche Längswirbelstruktur entgegen dem Uhrzeigersinn rotiert.

Die entlang der gesamten Seitenkante der Hohlraumöffnung induzierten Längswirbelstrukturen bewirken eine Zerstörung der quasi Zweidimensionalität der Scherschicht. Hierdurch wird die Stabilitätscharakteristik der Hohlraumscherschicht geändert und diese stabilisiert. Ferner induziert das Paar von Längswirbelstrukturen Geschwindigkeitskomponenten normal zur Hohlraumöffnung in die Strömung, die die Hohlraumscherschicht anheben und hierdurch die Neigung der Hohlraumscherschicht zur Wechselwirkung mit der Hohlraumrückseite mindern.

Die Längswirbelstrukturen sind zudem generisch großskalige, stationäre Strömungsstrukturen, die keine oder wenig zusätzliche Turbulenzen und Instationarität induzieren, so dass keine Erhöhung des Breitbandspektrums der Drucksignale im Hohlraum erfolgt. Neben den tonalen Signalanteilen werden damit sogar auch die Breitbandanteile ebenfalls gemindert.

Die Rotationsrichtung der Längswirbelstrukturen ist so gerichtet, dass die Längswirbelströmungen einen Sog aus dem Hohlraum bewirken. Dies hat quasi eine Luftabsaugung zur Folge.

Die Längswirbelstrukturen werden vorzugsweise durch Anordnung von einem Delta-Flügel im Bereich vor dem Hohlraum in Strömungsrichtung gesehen erzeugt. Der Delta-Flügel hat zwei Strömungsabrisskanten, die pfeilförmig entgegen der Strömungsrichtung zusammenlaufen. Der Delta-Flügel erstreckt sich quer zur Strömungsrichtung parallel zu einer Strömungsebene, die durch die Fläche der Öffnung des Hohlraumes definiert ist. Die Strömungsabrisskanten laufen somit stromaufwärts pfeilförmig relativ spitz zusammen. An den Strömungsabrisskanten wird die Strömung so abgelenkt, dass sie in Längsrichtung verwirbelt und jeweils eine Längswirbelstruktur induziert wird.

Der Pfeilwinkel ϕ des Delta-Flügels jeweils zwischen einer Strömungsabrisskante und der quer zur Strömungsrichtung verlaufenden Hinterkante des Delta-Flügels sollte etwa 70° betragen.

Der Anstellwinkel α des Delta-Flügels zwischen der Fläche des Delta-Flügels und der Strömungsfläche ist vorzugsweise veränderlich und während des Fluges bei offenem Hohlraum auf etwa 10° eingestellt.

Die Spannweite des Delta-Flügels stromabwärts im Bereich der Öffnung des Hohlraumes sollte etwa 1,5 mal so groß wie die Breite des Hohlraumes sein. Auf diese Weise werden die Längswirbelstrukturen optimal an den Seitenkanten des Hohlraumes induziert.

Aufgabe der Erfindung war es weiterhin, eine überströmte Flächenanordnung mit einem Hohlraum anzugeben, bei dem die Hohlraumschwingungen optimal gemindert werden.

Die Aufgabe wird durch eine Vorrichtung im Bereich vor dem Hohlraum in Strömungsrichtung gesehen zur Erzeugung einer Längswirbelpaarströmung mit zwei Längswirbelstrukturen im Bereich der Seitenkanten des Hohlraums in Strömungsrichtung gelöst, wobei die beiden Längswirbelstrukturen eine gegenläufig zueinander verlaufende Rotationsrichtung haben und die in Strömungsrichtung rechts befindliche Längswirbelstruktur im Uhrzeigersinn rotiert und die in Strömungsrichtung links befindliche Längswirbelstruktur entgegen dem Uhrzeigersinn rotiert.

Vorzugsweise ist eine Vorrichtung zur Verstellung des Anstellwinkels α des Delta-Flügels an den Delta-Flügel angekoppelt. In einer Ausführungsform kann im vorderen Bereich des Delta-Flügels eine Schwenkachse vorgesehen sein, wobei der Delta-Flügel um die Schwenkachse verschwenkbar ist.

Die Erfindung wird nachfolgend anhand der beigefügten Zeichnungen näher erläutert. Es zeigen:

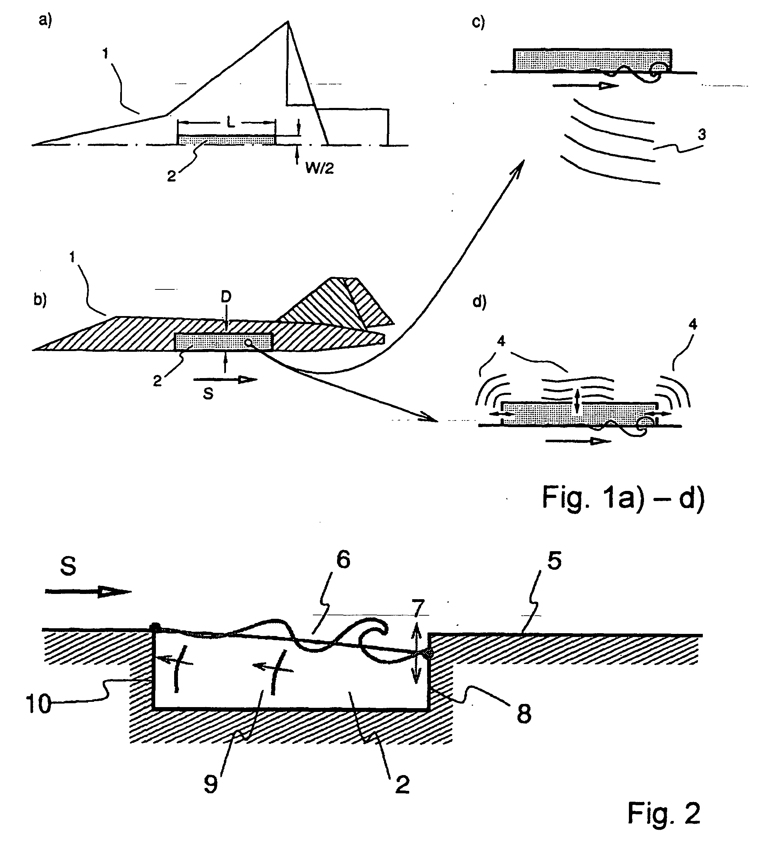

- Figur 1a -: schematische Halbschnittansicht auf die Unterseite eines Flugzeuges mit einem Hohlraum;
- Figur 1 b -: schematische Querschnittsansicht des Flugzeuges mit einem Hohlraum an seiner Unterseite;
- Figur 1c -: Querschnittsansicht des Hohlraums mit Schallwellen;
- Figur 1d -: Querschnittsansicht des Hohlraums mit Strukturschwingungen;
- Figur 2 -: schematische Darstellung eines Hohlraumquerschnitts mit einer Strömungsscherschicht;
- Figur 3 -: perspektivische Ansicht eines Delta-Flügels im Bereich vor einem Hohlraum zur Erzeugung von Längswirbelstrukturen an den Seitenkanten des Hohlraums;
- Figur 4 -: Querschnittsansicht eines Hohlraums mit gegenläufig rotierenden Längswirbelstrukturen;
- Figur 5 -: Ansicht eines Delta-Flügels entgegen der Ausströmrichtung;
- Figur 6 -: Längsschnittansicht eines verstellbaren Delta-Flügels;
- Figur 7 -: Draufsicht auf den im Bereich vor dem Hohlraum angeordneten Delta-Flügel.

Die Figuren 1a und 1b lassen ein Flugzeug 1 mit einem Hohlraum 2 an der Unterseite des Flugzeugrumpfes als Halbschnitt in Draufsicht (a) und im Querschnitt (b) erkennen. Der Hohlraum 2, z. B. ein Waffenschacht eines Kampfflugzeuges, hat eine Länge L in Strömungsrichtung S, eine Tiefe D und eine Breite W. Im Flug ist die Strömung im wesentlichen transsonisch, wenn sich das Flugzeug 1 mit einer Geschwindigkeit von etwa 0,8 bis 1,3 Mach bewegt.

Aus der Querschnittsdarstellung (1c) des Hohlraums 2 wird deutlich, dass sich eine hydrodynamisch instabile Strömungsscherschicht bildet, die zu Wellenbewegungen neigt, und sich an der Hohlraumrückwand aufstaut und Hohlraumschwingungen erzeugt, die als Schallsignale 3 abgegeben werden.

Aus der Querschnittsdarstellung (1d) des Hohlraums 2 wird deutlich, dass die Strömungsscherschicht zu Oszillationen 4 an dem Hohlraumboden und der Hohlraumvorderwand und Hohlraumrückwand führt. Dies kann zu Materialermüdung und Zerstörung der Struktur führen.

Die Figur 2 zeigt einen Hohlraum 2 im Querschnitt. Der Hohlraum 2 ist in eine Flächenanordnung 5 eingebaut, die in Strömungsrichtung S überströmt wird.

Es bildet sich eine Hohlraumscherschicht 6 aus, die hydrodynamisch instabil ist und infolgedessen zu räumlich aufklingenden Wellenbewegungen neigt. Hierdurch taucht die Hohlraumscherschicht 6 fortwährend in den Hohlraum 2 ein und wieder aus, was durch den Pfeil 7 skizziert ist. Hierdurch ist die Hohlraumrückwand 8 zeitweise der vollen Strömung an der Flächenanordnung 5 ausgesetzt, die sich an der Hohlraumrückwand 8 aufstaut und einen Druckimpuls erzeugt, dessen Schalldruckanteil 9 innerhalb des Hohlraums 2 zur Hohlraumvorderwand 10 vorläuft. An der Oberkante der Hohlraumvorderwand wird dann eine neue instabile Welle in der Hohlraumscherschicht 6 angeregt, so dass eine Rückkopplung und Verstärkung des Schwingungseffektes bewirkt wird.

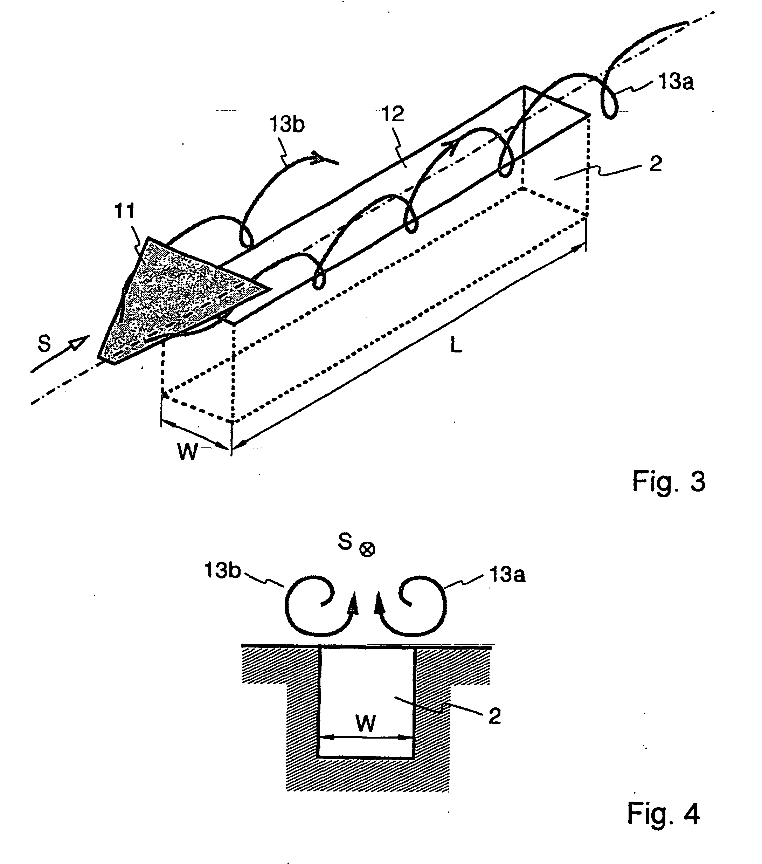

Die Figur 3 lässt eine perspektivische Ansicht eines Hohlraums 2 mit einem Delta-Flügel 11 erkennen, der im Bereich vor dem Hohlraum 2 in Strömungsrichtung S gesehen angeordnet ist.

Der sogenannte Delta-Flügel 11 hat ein Paar Strömungsabrisskanten, die entgegen der Strömungsrichtung S pfeilförmig zusammenlaufen. In der Draufsicht ist der Delta-Flügel 11 somit delta- oder dreieckförmig. Quer zur Strömungsrichtung S gesehen, erstreckt sich der Delta-Flügel 11 parallel zur Strömungsebene, die durch die Öffnung 12 des Hohlraums 2 definiert ist.

Wenn nun die Luftströmung an dem Delta-Flügel 11 vorbeiströmt, wird diese aufgrund der Strömungsabrisskanten so verwirbelt, dass eine Längswirbelpaarströmung mit zwei Längswirbelstrukturen 13a und 13b im Bereich der Seitenkanten des Hohlraums 2 erzeugt wird.

Die Längswirbelstrukturen 13a und 13b haben eine solche gegenläufig zueinander verlaufende Rotationsrichtung, wie in der Figur 4 skizziert, dass sie einen Sog aus dem Hohlraum 2 heraus erzeugen.

Die Figur 4 lässt den Hohlraum 2 im Querschnitt in Strömungsrichtung S gesehen erkennen. Es wird deutlich, dass die Längswirbelstrukturen 13a und 13b mit ihrer Wirbelachse jeweils im Bereich der Seitenkanten des Hohlraums 2 ausgebildet sind. Die in Strömungsrichtung S rechts befindliche Längswirbelstruktur 13a rotiert im Uhrzeigersinn und die in Strömungsrichtung S links befindliche Längswirbelstruktur 13b rotiert entgegen dem Uhrzeigersinn.

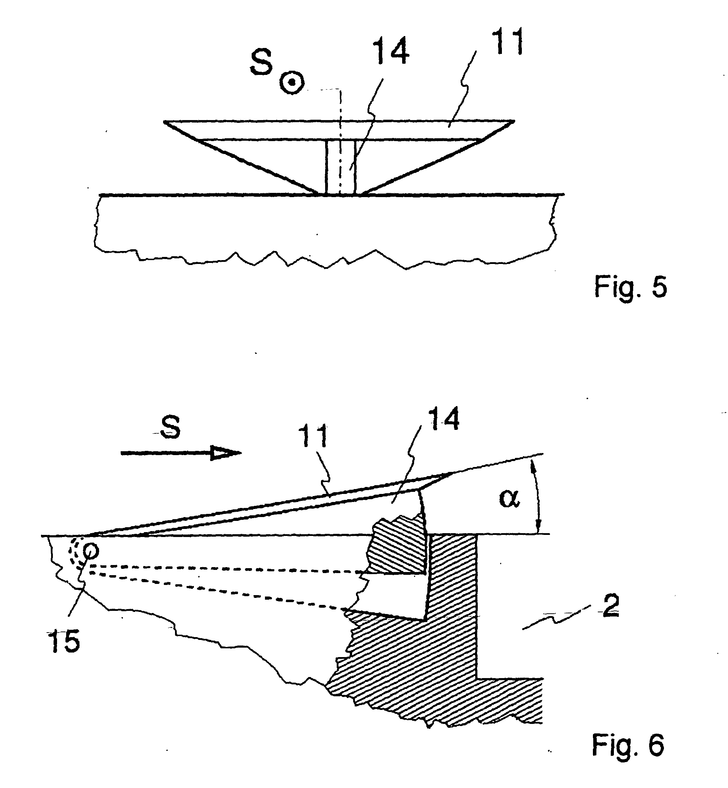

Die Figur 5 lässt den Delta-Flügel 11 im Blick entgegen der Strömungsrichtung S erkennen. Es ist daher die Hinterkante des Delta-Flügels 11 sichtbar. Der Delta-Flügel 11 besteht im wesentlichen aus einer dreieckförmigen möglichst dünnen, aber stabilen Platte, die an der Mittelachse des Delta-Flügels 11 an einen sich in die Flächenanordnung hinein erstreckenden Querholm 14 integral verbunden und über den Querholm 14 mit der Flächenstruktur verbunden ist.

Die Figur 6 lässt den Delta-Flügel 11 im Querschnitt erkennen, der im Bereich vor den Hohlraum 2 angeordnet ist.

Es ist zu erkennen, dass der Querholm 14 an eine Schwenkachse 15 im vorderen Bereich des Delta-Flügels 11 an die Flächenstruktur angelenkt und um die Schwenkachse 15 um einen Anstellwinkel α verschwenkbar ist. Der Anstellwinkel α ist als Winkel zwischen der Fläche des Delta-Flügels 11 und der Strömungsebene festgelegt, die durch die Fläche der Öffnung des Hohlraums 2 definiert ist. Im Flug wird der Anstellwinkel α vorzugsweise auf etwa 10° eingestellt. Wenn der Hohlraum 2 geschlossen ist, wird der Delta-Flügel 11 vollständig eingefahren.

Aus den Figuren 5 und 6 ist zu erkennen, dass die Strömungsabrisskanten eine relativ scharfkantige Fase aufweisen. Dies führt zu einer verbesserten Wirbelablösung.

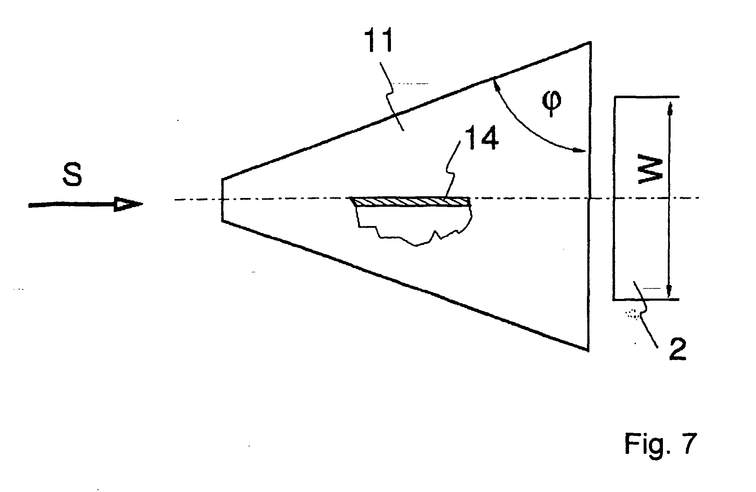

Die Figur 7 lässt den Delta-Flügel 11, der im Bereich vor dem Hohlraum 2 und direkt daneben angeordnet ist, in der Draufsicht erkennen. Es wird deutlich, dass sich der Querholm 14 entlang der Mittelachse des Delta-Flügels 11 erstreckt und senkrecht zur Fläche des Delta-Flügels 11 integral mit dem Delta-Flügel 11 verbunden ist. Die Strömungsabrisskanten laufen entgegen der Strömungsrichtung S pfeilförmig zusammen, wobei die Spannweite des Delta-Flügels etwa 1,5 mal so groß wie die Breite W des Hohlraums 2 ist.

Der Pfeilwinkel ϕ jeweils zwischen einer Strömungsabrisskante und der quer zur Strömungsrichtung S verlaufenden Hinterkante des Delta-Flügels 11 beträgt etwa 70°.

## Patentansprüche

1. Verfahren zur Reduzierung von Schwingungen in einem Hohlraum (2), wobei die Öffnung (12) des Hohlraumes (2) von einer Strömung in eine Strömungsrichtung (S) überströmt wird, **gekennzeichnet durch** Erzeugen einer Längswirbelpaarströmung mit zwei Längswirbelstrukturen (13a, 13b) an den Seitenkanten des Hohlraums (2) in Strömungsrichtung (S), wobei die Rotationsrichtung der beiden Längswirbelstrukturen (13a, 13b) der Längswirbelpaarströmung gegenläufig zueinander und die beiden Längswirbelstrukturen (13a, 13b) so gerichtet sind, dass die in Strömungsrichtung (S) rechts befindliche Längswirbelstruktur (13a) im Uhrzeigersinn rotiert und die in Strömungsrichtung (S) links befindliche Längswirbelstruktur (13b) entgegen dem Uhrzeigersinn rotiert.

2. Verfahren nach Anspruch 1, **gekennzeichnet durch** Anordnen von einem Delta-Flügel (11) im Bereich vor dem Hohlraum (2), wobei der Delta-Flügel (11) zwei Strömungsabrisskanten hat, die pfeilförmig entgegen der Strömungsrichtung (S) zusammenlaufen, und wobei sich der Delta-Flügel (11) quer zur Strömungsrichtung (S) parallel zu einer Strömungsebene erstreckt, die **durch** die Fläche der Öffnung des Hohlraumes (2) definiert ist.

3. Verfahren nach Anspruch 2, **dadurch gekennzeichnet, dass** der Pfeilwinkel ϕ jeweils zwischen einer Strömungsabrisskante und der quer zur Strömungsrichtung (S) verlaufenden Hinterkante des Delta-Flügels etwa 70° beträgt.

4. Verfahren nach Anspruch 2 oder 3, **dadurch gekennzeichnet, dass** der Anstellwinkel α des Delta-Flügels zwischen der Fläche des Delta-Flügels (11) und der Strömungsfläche auf etwa 10° eingestellt ist.

5. Verfahren nach Anspruch 4, **dadurch gekennzeichnet, das** der Anstellwinkel α veränderlich ist.

6. Verfahren nach einem der Ansprüche 2 bis 5, **dadurch gekennzeichnet, dass** die Spannweite des Delta-Flügels (11) etwa 1,5 mal so groß wie die Breite (W) des Hohlraums (2) ist.

7. Überströmte Flächenanordnung mit einem Hohlraum (2), wobei die Öffnung (12) des Hohlraums (2) von einer Strömung in einer Strömungsrichtung (S) überströmbar ist, **gekennzeichnet durch** eine Vorrichtung im Bereich vor dem Hohlraum (2) in Strömungsrichtung (S) gesehen, zur Erzeugung von Längswirbelpaarströmungen mit zwei Längswirbelstrukturen (13a, 13b) im Bereich der Seitenkanten des Hohlraums (2) in Strömungsrichtung (S), wobei die beiden Längswirbelstrukturen (13a, 13b) eine gegenläufig zueinander verlaufende Rotationsrichtung haben, wobei die in Strömungsrichtung (S) rechts befindliche Längswirbelstruktur (13a) im Uhrzeigersinn rotiert und die in Strömungsrichtung (S) links befindliche Längwirbelstruktur (13b) entgegen dem Uhrzeigersinn rotiert.

8. Flächenanordnung nach Anspruch 7, **dadurch gekennzeichnet, dass** die Vorrichtung ein Delta-Flügel (11) ist, der zwei Strömungsabrisskanten hat, die pfeilförmig entgegen der Strömungsrichtung (S) zusammenlaufen, und wobei sich der Delta-Flügel (11) quer zur Strömungsrichtung (S) parallel zu einer Strömungsebene erstreckt, die durch die Fläche der Öffnung des Hohlraums (2) definiert ist.

9. Flächenanordnung nach Anspruch 8, **dadurch gekennzeichnet, dass** der Pfeilwinkel ϕ jeweils zwischen einer Strömungsabrisskante und der quer zur Strömungsrichtung (S) verlaufenden Hinterkante des Delta-Flügels (11) etwa 70° beträgt.

10. Flächenanordnung nach einem der Ansprüche 8 oder 9, **dadurch gekennzeichnet, dass** der Anstellwinkel α des Delta-Flügels (11) zwischen der Fläche des Delta-Flügels (11) und der Strömungsfläche etwa 10° beträgt.

11. Flächenanordnung nach einem der Ansprüche 7 bis 10, **gekennzeichnet durch** eine Vorrichtung zur Verstellung des Anstellwinkels α des Delta-Flügels (11).

12. Flächenanordnung nach Anspruch 11, **gekennzeichnet durch** eine Schwenkachse (15) im vorderen Bereich des Delta-Flügels (11), wobei der Delta-Flügel (11) um die Schwenkachse (15) verschwenkbar ist.

13. Flächenanordnung nach einem der Ansprüche 7 bis 12, **dadurch gekennzeichnet, dass** die Spannweite des Delta-Flügels (11) etwa 1,5 mal so groß wie die Breite (W) des Hohlraums (2) ist.

14. Flächenanordnung nach einem der Ansprüche 7 bis 12, **dadurch gekennzeichnet, dass** die Strömungsabrisskanten des Delta-Flügels (11) scharfkantige Fasen aufweisen.

## Claims

1. Method for reduction of oscillations in a cavity (2), the opening (12) in the cavity (2) having flow passing over it in a flow direction (S), **characterized by** the production of a longitudinal vortex pair flow with two longitudinal vortex structures (13a, 13b) on the side edges of the cavity (2) in the flow direction (S), with the rotation direction of the two longitudinal vortex structures (13a, 13b) of the longitudinal vortex pair flow pointing in opposite directions to one another, and the two longitudinal vortex structures (13a, 13b) being directed such that the longitudinal vortex structure (13a) which is located on the right in the flow direction (S) rotates in the clockwise sense and the longitudinal vortex structure (13b) which is located on the left in the flow direction (S) rotates in the anticlockwise sense.

2. Method according to Claim 1, **characterized by** the arrangement of a delta wing (11) in the area in front of the cavity (2), with the delta wing (11) having two flow separation edges which run together in the form of an arrow in the opposite direction to the flow direction (S), and with the delta wing (11) extending transversely with respect to the flow direction (S) parallel to a flow plane which is defined by the area of the opening of the cavity (2).

3. Method according to Claim 2, **characterized in that** the arrow angle φ in each case between a flow separation edge and the trailing edge of the delta wing running transversely with respect to the flow direction (S) is approximately 70°.

4. Method according to Claim 2 or 3, **characterized in that** the incidence angle α of the delta wing between the surface of the delta wing (11) and the flow surface is set to approximately 10°.

5. Method according to Claim 4, **characterized in that** the incidence angle α is variable.

6. Method according to one of Claims 2 to 5, **characterized in that** the span of the delta wing (11) is approximately 1.5 times as great as the width (W) of the cavity (2).

7. Surface arrangement over which flow passes having a cavity (2), in which a flow can flow over the opening (12) in the cavity (2) in a flow direction (S), **characterized by** an apparatus in the area in front of the cavity (2), when seen in the flow direction (S), in order to produce longitudinal vortex pair flows with two longitudinal vortex structures (13a, 13b) in the area of the side edges of the cavity (2) in the flow direction (S), with the two longitudinal vortex structures (13a, 13b) having rotation directions which run in opposite directions to one another, with the longitudinal vortex structure (13a) which is located on the right in the flow direction (S) rotating in the clockwise sense, and the longitudinal vortex structure (13b) which is located on the left in the flow direction (S) rotating in the anticlockwise sense.

8. Surface arrangement according to Claim 7, **characterized in that** the apparatus is a delta wing (11), which has two flow separation edges which run together in the form of an arrow in the opposite direction to the flow direction (S), and with the delta wing (11) extending transversely with respect to the flow direction (S) parallel to a flow plane which is defined by the area of the opening of the cavity (2).

9. Surface arrangement according to Claim 8, **characterized in that** the arrow angle φ in each case between a flow separation edge and the trailing edge of the delta wing (11) running transversely with respect to the flow direction (S) is approximately 70°.

10. Surface arrangement according to one of Claims 8 or 9, **characterized in that** the incidence angle α of the delta wing (11) between the surface of the delta wing (11) and the flow surface is approximately 10°.

11. Surface arrangement according to one of Claims 7 to 10, **characterized by** an apparatus for adjustment of the incidence angle α of the delta wing (11).

12. Surface arrangement according to Claim 11, **characterized by** a pivoting shaft (15) in the front area of the delta wing (11), in which the delta wing (11) can pivot about the pivoting shaft (15).

13. Surface arrangement according to one of Claims 7 to 12, **characterized in that** the span of the delta wing (11) is approximately 1.5 times as great as the width (W) of the cavity (2).

14. Surface arrangement according to one of Claims 7 to 12, **characterized in that** the flow separation edges of the delta wing (11) have sharp-edged chamfers.

## Revendications

1. Procédé pour réduire les oscillations dans une cavité (2), l'ouverture (12) de la cavité (2) étant exposée à un écoulement dans une direction d'écoulement (S), **caractérisé par** la génération d'un écoulement en paire tourbillonnaire longitudinale, comprenant deux structures tourbillonnaires longitudinales (13a, 13b) sur les deux bords latéraux de la cavité (2) dans la direction d'écoulement (S), la direction de rotation des deux structures tourbillonnaires longitudinales (13a, 13b) de l'écoulement en paire tourbillonnaire longitudinale étant orientée de façon mutuellement contraire et les deux structures tourbillonnaires longitudinales (13a, 13b) sont orientées de façon que la structure tourbillonnaire longitudinale (13a) se trouvant à droite dans la direction de l'écoulement (S) tourne en sens horaire et la structure tourbillonnaire longitudinale (13b) se trouvant à gauche dans la direction d'écoulement (S) tourne en sens anti-horaire.

2. Procédé selon la revendication 1, **caractérisé par** l'agencement d'une aile delta (11) dans la région précédant la cavité (2), l'aile delta (11) possédant deux bords de décollement de l'écoulement qui convergent en forme de flèche à l'encontre de la direction d'écoulement (S), tandis que transversalement à la direction d'écoulement (S) l'aile delta (11) s'étend parallèlement à un plan d'écoulement défini par la surface de l'ouverture de la cavité (2).

3. Procédé selon la revendication 2, **caractérisé en ce que** l'angle ϕ de la flèche entre chaque bord de décollement de l'écoulement et le bord arrière de l'aile delta, s'étendant transversalement à la direction d'écoulement (S), est d'environ 70°.

4. Procédé selon la revendication 2 ou 3, **caractérisé en ce que** l'angle d'incidence α de l'aile delta entre la surface de l'aile delta (11) et la surface d'écoulement est réglé à environ 10°.

5. Procédé selon la revendication 4, **caractérisé en ce que** l'angle d'incidence α est modifiable.

6. Procédé selon l'une des revendications 2 à 5, **caractérisé en ce que** l'envergure de l'aile delta (11) est environ une fois et demie plus grande que la largeur (W) de la cavité (2).

7. Agencement de surface exposé à un écoulement, et comprenant une cavité (2), l'ouverture (12) de la cavité (2) étant susceptible d'être exposée à un écoulement dans une direction d'écoulement (S), **caractérisé par** un dispositif dans la région précédant la cavité (2) vue dans la direction d'écoulement (S), pour la génération d'écoulements en paire tourbillonnaire longitudinale comprenant deux structures tourbillonnaires longitudinales (13a, 13b) dans la région des bords latéraux de la cavité (2) dans la direction d'écoulement (S), les deux structures tourbillonnaires longitudinales (13a, 13b) ayant une direction de rotation mutuellement contraire, la structure tourbillonnaire longitudinale (13a) se trouvant à droite dans la direction d'écoulement (S) tournant en sens horaire et la structure tourbillonnaire longitudinale (13b) se trouvant à gauche dans la direction d'écoulement (S) tournant en sens anti-horaire.

8. Agencement de surface selon la revendication 7, **caractérisé en ce que** le dispositif est une aile delta (11) qui possède deux bords de décollement de l'écoulement qui convergent en forme de flèche à l'encontre de la direction d'écoulement (S), tandis que transversalement à la direction d'écoulement (S), l'aile delta (11) s'étend parallèlement à un plan d'écoulement défini par la surface de l'ouverture de la cavité (2).

9. Agencement de surface selon la revendication 8, **caractérisé en ce que** l'angle ϕ de la flèche entre chaque bord de décollement de l'écoulement et le bord arrière de l'aile delta, s'étendant transversalement à la direction d'écoulement (S), est d'environ 70°.

10. Agencement de surface selon la revendication 8 ou 9, **caractérisé en ce que** l'angle d'incidence α de l'aile delta (11) entre la surface de l'aile delta (11) et la surface de l'écoulement (S) est d'environ 10°.

11. Agencement de surface selon l'une des revendications 7 à 10, **caractérisé par** un dispositif pour modifier l'angle d'incidence α de l'aile delta (11).

12. Agencement de surface selon la revendication 11, **caractérisé par** un axe de pivotement (15) dans la région avant de l'aile delta (11), l'aile delta (11) étant pivotante autour de l'axe de pivotement (15).

13. Agencement de surface selon l'une des revendications 7 à 12, **caractérisé en ce que** l'envergure de l'aile delta (11) est environ une fois et demie plus grande que la largeur (W) de la cavité (2).

14. Agencement de surface selon l'une des revendications 7 à 12, **caractérisé en ce que** les bords de décollement de l'écoulement de l'aile delta (11) présentent des biseaux acérés.
